Europäisches Patentamt

European Patent Office

Office européen des brevets

(11) Veröffentlichungsnummer: **0 109 454**
**B1**

(12) **EUROPÄISCHE PATENTSCHRIFT**

(45) Veröffentlichungstag der Patentschrift: **30.09.87**

(21) Anmeldenummer: **82110655.6**

(22) Anmeldetag: **18.11.82**

(51) Int. Cl.⁴: **A 23 G 1/00,** A 23 G 1/04

(54) **Verfahren zur Herstellung eines agglomerierten kakaohältigen Produkts.**

(43) Veröffentlichungstag der Anmeldung:
**30.05.84 Patentblatt 84/22**

(45) Bekanntmachung des Hinweises auf die
Patenterteilung:
**30.09.87 Patentblatt 87/40**

(84) Benannte Vertragsstaaten:
**AT BE CH DE FR GB IT LI LU NL SE**

(56) Entgegenhaltungen:
**FR-A- 900 050**
**FR-A-1 236 209**
**FR-A-2 101 514**
**GB-A-1 084 385**
**US-A-2 850 388**
**US-A-3 013 881**
**US-A-3 027 257**
**US-A-3 053 663**

(73) Patentinhaber: *Instantina Nahrungsmittel*
*Entwicklungs-und Produktions Gesellschaft*
*m.b.h*
**Am Heumarkt 13**
**A-1030 Wien (AT)**

(73) Patentinhaber: **MARESI Nährmittelindustrie**
**Gesellschaft m.b.H.**
**Werdertorgasse 5-7**
**A-1010 Wien (AT)**

(72) Erfinder: **Ehrlich, Helmuth, Dipl.-Ing.**
**A-2281 Raasdorf/W 120 (AT)**

(74) Vertreter: **Schmidt-Evers, Jürgen, Dipl.-Ing. et al**
**Patentanwälte Dipl.-Ing. H. Mitscherlich Dipl.-**
**Ing. K. Gunschmann Dipl.-Ing. Dr.rer.nat. W.**
**Körber Dipl.-Ing. J. Schmidt-Evers Dipl.-Ing. W.**
**Melzer Steinsdorfstrasse 10**
**D-8000 München 22 (DE)**

Courier Press, Leamington Spa, England.

EP 0 109 454 B1

## Beschreibung

Die Erfindung betrifft ein Verfahren zur Herstellung eines agglomerierten kakaohaltigen Produktes und dafür geeignete Ausgangsmischungen.

Kakao-Agglomerate sind einerseits mit einer bedeutenden Menge an Milchpulver hergestellt worden, offenbar später einen fertigen Drink zu gewinnen; gemäß US—A—28 50 388 bzw. 3 013 861 erfolgt die notwendige Befeuchtung mit Wasser-Nebel und Wasserdampf bzw. mit Sattdampf.

Daneben werden zur Herstellung von Instantkakao auch Mischungen von 20—25% Magerkakao und 70—75% Zucker verwendet. Diesen Mischungen werden noch geringe Mengen von Salz, Vanillin und Geschmacksstoffen beigegeben; der Zuckeranteil wird bei einigen Produkten zum Teil durch Traubenzucker substituiert. Die FR—A—12 36 209 zeigt z.B. die Herstellung eines Pulvers auf der Basis eines Kakao-Zuckergemischs im Prozentverhältnis von 20:80.

Um diese Mischungen zu instantisieren, wird meistens das Verfahren der Dampfagglomeration angewandt. Hierbei wird das vorgemischte, fein vermahlene Produkt mit einem Dampfluftgemisch in Berührung gebracht, worauf die feinen Partikeln agglomerieren. Diese Dampfagglomeration benötigt eine große Menge von Dampf, wobei die Menge selbstverständlich von Anlage zu Anlage variiert.

Es wurde demgegenüber überraschenderweise gefunden, daß durch Zusatz von 1—3 Magermilchpulver zu der zu agglomerierenden Mischung der Dampfverbrauch bei dem Dampfen mit einem Dampf-Luft-Gemisch stark sinkt. Es wurden Verbrauchsreduktionen bis zu 30% des Dampfes festgestellt. Ein weiterer Vorteil des erfindungsgemäßen Magermilchpulverzusatzes liegt in der ebenfalls nicht zu erwartenden Vergleichmäßigung der Agglomeration und dem technologisch sichereren Verhalten der erfindungsgemäßen Mischung.

In einer vorteilhaften Ausgestaltung des erfindungsgemäßen Verfahrens wird ein Teil des Zuckers durch Milchzucker substituiert, wodurch überraschenderweise die Wirkungen des Magermilchzusatzes noch verstärkt werden.

Ohne die Erfindung darauf zu beschränken, wird eine beispielhafte Zusammensetzung eines erfindungsgemäßen agglomerierten kakaohaltigen Produktes angegeben.

25% Magerkakao
67% Zucker
5% Milchzucker
2% Magermilchpulver
1% Lezithin, Vanillin, Salz

Bei dieser milchpulver- und milchzuckerhaltigen Mischung wird dampfsparend ein sehr schönes grobflockiges Agglomerat (Hauptfraktion 3—7 mm) erzielt.

## Patentansprüche

1. Verfahren zur Herstellung eines agglomerierten kakaohaltigen Produktes, wobei das vorgemischte fein vermahlene Ausgangsmaterial der Dampfagglomeration unterworfen wird, dadurch gekennzeichnet, daß neben 20—25% Magerkakao, 70—75% Zucker und rund 1% anderen Geschmacksstoffen noch 1—3% Magermilchpulver im Ausgangsmaterial vorhanden sind und das Dampfen mit einem Dampf-Luft-Gemisch erfolgt.

2. Verfahren nach Anspruchs 1, dadurch gekennzeichnet, daß 1—7% Milchzucker im Ausgangsmaterial vorhanden sind, wobei die Gesamtzuckerkonzentration unverändert bleibt.

3. Kakaohaltige Zusammensetzung zur Durchführung des Verfahrens nach Anspruch 1, dadurch gekennzeichnet, daß sie 20—25% Magerkakao, 70—75% Zucker, 1—3% Magermilchpulver und Ca. 1% Salz, Vanillin under andere Geschmacksstoffe enthält.

4. Kakaohaltive Zusammensetzung zur Durchführung des Verfahrens nach Anspruch 2, dadurch gekennzeichnet, daß sie 20—25% Magerkakao, 70—75% Zucker, davon 1—7% Milchzucker, 1—3% Magermilchpulver und ca. 1% Salz, Vanillin und andere Geschmacksstoffe enthält.

## Revendications

1. Procédé de fabrication d'un produit aggloméré contenant du cacao, en soumettant la matière de départ prémélangée et finement broyée à une agglomération à la vapeur, caractérisé en ce que, il y a dans la matière de départ, outre de 20 à 25% de cacao débeurré, de 70 à 75% de sucre et environ 1% d'autres aromates, de 1 à 3% de lait écrémé en poudre, et le traitement à la vapeur s'effectue par un mélange de vapeur et d'air.

2. Procédé suivant la revendication 1, caractérisé en ce que, il y a de 1 à 7% de lactose dans la matière de départ, la concentration totale en sucre restant inchangée.

3. Composition contenant du cacao pour effectuer le procédé suivant la revendication 1, caractérisée en ce que, elle contient de 20 à 25% de cacao débeurré, de 70 à 75% de sucre, de 1 à 3% de lait écrémé en poudre, et environ 1% de sel, de la vanilline et d'autres aromates.

4. Composition contenant du cacao pour effectuer le procédé suivant la revendication 2, caractérisée en ce que, elle contient de 20 à 25% de cacao débeurré, de 70 à 75% de sucre, dont de 1 à 7% de lactose, de 1 à 3% de lait écrémé en poudre et environ 1% de sel, de la vanilline et d'autres aromates.

## Claims

1. Method for making an agglomerated product containing cocoa, the pre-mixed finely ground raw material being subjected to steam agglomeration, characterised in that in addition to 20—25% lean cocoa, 70—75% sugar and approximately 1% other flavouring agents, a further 1 to 3% skimmed milk powder is present in the raw material and steaming with a steam/air mixture takes place.

2. Method according to Claim 1, characterised in that 1 to 7% lactose is present in the raw material, the total sugar concentration remaining unchanged.

3. Cocoa-containing composition for carrying out the method according to Claim 1, characterised in that it contains 20—25% lean cocoa, 70—75% sugar, 1—3% skimmed milk powder and approximately 1% salt, vanilla and other flavouring agents.

4. Cocoa-containing composition for carrying out the method according to Claim 2, characterised in that it contains 20—25% lean cocoa, 70—75% sugar, whereof 1—7% is lactose, 1—3% skimmed milk powder and approximately 1% salt, vanilla and other flavouring agents.